# EUROPEAN PATENT APPLICATION

(11) **EP 0 818 361 A1**
(43) Date of publication of application: **14.01.1998**
(21) Application number: 97304300.3
(22) Date of filing: 19.06.1997
(51) Int. Cl.: B60R 21/20

(54) **Localized softening of air bag module housing**

(30) Priority: 10.07.1996 US 677477
(71) Applicant: Autoliv ASP, Inc., Ogden, Utah 84405-1563 (US)
(72) Inventor: Halford, Rick L., Layton, Utah 84040 (US); Coleman, James C., Ogden, Utah 84414 (US)
(74) Representative: Bankes, Stephen Charles Digby

(57) **Abstract**

A reaction canister (10) for a vehicle passive restraint system which has a softened, impact energy absorbing sidewall portion (6) adjacent an automotive panel likely to be impacted by an occupant in the event of a low speed collision. The resulting softening serves to avoid injury to the occupant as a result of contact with the panel.

## Description

This invention relates to an inflation passive restraint system for use in a motor vehicle for restraining a seated occupant during a collision. More particularly, it relates to an improvement in the structural strength characteristics of the reaction canister which results in a reduced potential for head injuries during low speed accidents.

The reaction canister of a vehicle passive restraint system provides protection for the gas generator and the inflatable bag until the bag deploys. A reaction canister for a passenger module is normally formed of a trough-shaped sidewall which may be extruded and cut to the desired length. The canister body is typically extruded from high strength aluminum alloys such as 6061 and 6063 alloys and is generally employed in the T-6 condition. The ends of the sidewall are closed by end plates which are generally stamped steel plates but also may be stamped flat aluminum plates. The end plates are formed in a conventional manner. An example of a reaction canister in accordance with the prior art will be found in U.S. Pat. No. 4,941,678 of Lauritzen, et al.

The reaction canister of the restraint system is normally positioned behind the instrument panel of a vehicle. The uppermost edges of the reaction canister may be within one inch, and sometimes closer, to the back surface of the instrument panel. In the event of a low speed accident without air bag deployment, an occupant's head or other body part may make impact with the instrument panel and drive it against the edge of the reaction canister. Such an event can cause injury to the vehicle occupant. Standards imposed by the National Highway Safety Administration, i.e. Federal Motor Vehicle Safety Standard (FMVSS 201) upon the structural characteristics of the restraint systems are designed to lessen the injury to vehicle occupants upon the occurrence of such an event.

One approach used in the prior art for solving this problem has been to add flanges or rounded edges to the otherwise open edges of the reaction canister. This has helped to a degree but the canister still remains very stiff. Another approach has been to add a pattern of slots in the trough-like sidewall and in the end panels. This has helped to weaken the edges but has also weakened the canister with respect to lateral displacement or "bell mouthing." It also creates potential snag points for the bag. Another approach has been to cut down the sidewalls and end plates, thereby leaving the bag exposed to act as an impact cushion. This, however, leaves the bag unsupported and unprotected. An example of a reaction canister having weakened sidewalls in the regions adjacent the automotive panels is found in U.S. Pat. No. 5,342,082 of Kriska, et al.

Accordingly, it is a primary object of the present invention to provide an improved reaction canister having softened portions which yield to direct impact but resist lateral displacement. Other objects, features, and advantages will become apparent from the following description and appended claims.

In accordance with this invention, a reaction canister is provided for housing and positioning the gas generator and inflatable bag of a passive restraint system. The canister comprises a trough-shaped, preferably extruded, aluminum body and a plate for each end. In order to obtain the desired strength and stiffness for the aluminum canister module body it is typically heat treated to the desired strength condition. In the case of conventionally used 6061 and 6063 series aluminum alloys, such aluminum modules are provided in the T-6 temper. By T-6 temper is meant that the aluminum body is subject to a heat treatment comprising heating the aluminum to its solution heat treating range followed by an artificial aging operation. A T-5 temper is obtained in a similar manner.

The strength and stiffness of a T-6 temper is preferred for 6061 and 6063 aluminum alloys because it minimizes module deflection, i.e. bell mouthing. Similarly, a T-5 temper is preferred for 6005 aluminum modules. However, as the module stiffness increases the possibility of passing FMVSS 201 standards imposed by the National Highway Safety Administration decreases. In accordance with the present invention, the as heat treated module is provided with portions having variable hardness/strength at predetermined locations. According to the preferred embodiment of the invention, the portions of variable hardness/strength are obtained by subjecting the as heat treated aluminum module to localized annealing or softening heat treatments. The annealing heat treatment returns the treated aluminum body portions to a more ductile, i.e. softened, state than the unannealed portions. This will allow the module to absorb energy in a more controlled manner and pass the FMVSS 201 standard. The softened areas are generally provided in the sidewall portions of the module closely adjacent to its uppermost edges, which areas, upon positioning of the restraint system containing the module in the instrument panel of the vehicle are closely adjacent the back surface of the instrument panel. This design concept would allow the aluminum module to meet the requirements of FMVSS 201 without using any other secondary operations, such as perforations, folds, etc.

Preferred embodiments of the invention will now be described with reference to the accompanying drawings wherein:

FIG. 1 is an isometric view of an extruded aluminum body portion of a reaction canister having variably hardened walls.

FIG. 2 is an isometric view of another form of one piece canister with an integral diffuser.

FIG. 3 is an isometric view of a three piece reaction canister with an integral diffuser.

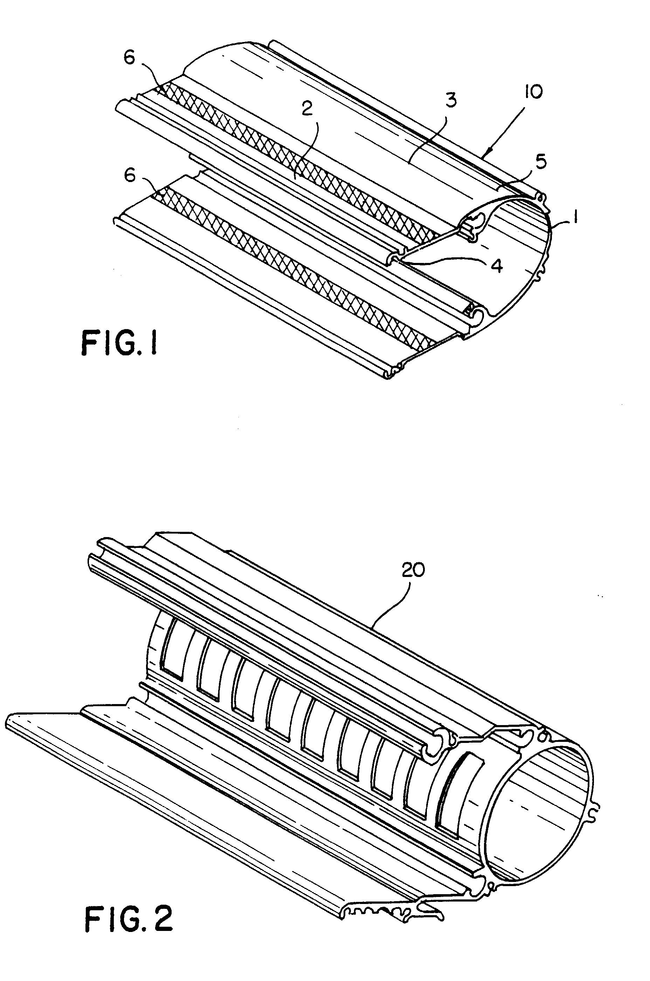

FIG. 1 illustrates a preferred embodiment of an elongated trough-shaped body part 10 for a reaction canister in accordance with the present invention. It is an asymmetrical long, narrow open receptacle having a rounded concave bottom wall I and opposite top 2 and bottom 3 sidewalls having first 4 and second 5 opposite ends. The reaction canister body shown in FIG. 1 is installed in such a manner that the first ends 4 of top walls 2 lie closely adjacent a vehicle instrument panel. Accordingly, top walls 2 will be provided with predetermined softened portions 6. The softening is imparted by applying a localized anneal to portions 6 of top walls 2 to soften said portions.

A typical aluminum module housing is extruded using either 6061 or 6063 aluminum alloy in the T-6 condition. The T-6 condition is generally achieved by a solution heat treating process followed by artificial aging. The T-6 tempering improves the mechanical properties (strength and stiffness) of the aluminum. This increase in strength and stiffness is desirable to prevent significant module deflection (bell mouthing) which would result in instrument panel damage. However, a particularly stiff module housing doesn't absorb energy in a controlled manner which can cause the module to fail FMVSS 201 head impact standards. A very stiff module can cause deceleration spikes in excess of 80g's for more than 3 milliseconds (max. values allowed in FMVSS 201). In this regard, localized softening (annealing) of portions of the module to a hardness equivalent to a T-4 temper according to the present invention is beneficial. The more malleable annealed section allows the module to absorb energy in a more consistent controlled manner. A T-4 condition is normally obtained by solution heat treating (annealing) followed by natural aging to a stable condition. By way of example, an extruded 6061 alloy in a T-6 condition would be expected to exhibit an ultimate tensile strength of about 38 ksi and a minimum Rockwell E hardness of about 90 whereas a T-4 temper would be expected to result in a tensile strength of about 26 ksi and a minimum Rockwell E hardness of about 64. An extruded 6063 aluminum alloy in the T-6 condition has a minimum ultimate tensile strength of about 30 ksi and a minimum Rockwell E hardness of about 75, and in the T-4 condition has a minimum ultimate tensile strength of about 18 ksi and a minimum Rockwell E hardness of about 50. A 6061 aluminum alloy has a nominal composition of 1.0% Mg, 0.6% Si, 0.27% Cu, 0.20% Cr balance Al. A 6063 aluminum alloy has a nominal composition of 0.7% Mg, 0.4% Si, balance Al.

It is also contemplated that 6005 aluminum alloy can be used for the module in which case it is provided in the T-5 condition. A 6005 aluminum alloy has a nominal composition of 0.5% Mg and 0.8% Si, balance Al. When using extruded 6005 aluminum alloy, the more malleable annealed, i.e. softened, portions are produced from an alloy having properties equivalent to a T-1 temper. By way of example, a 6005 alloy in a T-5 condition would be expected to exhibit a minimum ultimate tensile strength of about 38 ksi whereas a T-1 condition would be expected to exhibit a minimum ultimate tensile strength of about 25 ksi.

The localized softening (annealing) can be accomplished by using any conventional heating technique such as induction heating, flame heating, etc. The specific heat treatment conditions, i.e. time, temperature, etc. required to achieve the results of the present invention, are part of the armamentarium of one skilled in the heat treating art. Moreover, those skilled in the art will understand that any conventional heat treating technique which will allow only a narrow strip of the sidewall to be softened by heat treatment (annealed) while the remainder of the sidewalls are maintained in their original hardened condition will suffice to practice the present invention. Further, those skilled in the art will readily understand how to heat treat the module so that only predetermined portions thereof are provided with strength, i.e. softness values, less than that of the remaining unannealed portions. The localized softening treatment can be achieved either before or after extrusion. The predetermined softened or annealed portions of the canister sidewalls have been likened as equivalent to the strength and hardness properties resulting from T-4 (6061, 6063) and T-1 (6005) processing, however, those in the art will understand that providing any variable degree of hardness for such portions which would result in a canister meeting the FMVSS 201 standards, while maintaining the overall canister strength properties, is contemplated to be within the scope of the invention.

While FIG. 1 illustrates an integral module having vertical equidistant sidewalls, it is to be understood that providing softened areas of the module within the spirit and scope of the present invention can be practiced with other canister configurations depending upon particular vehicle manufacturing requirements. FIG. 2 illustrates an alternative one-piece reaction canister body 20, which can be manufactured according to the present invention.

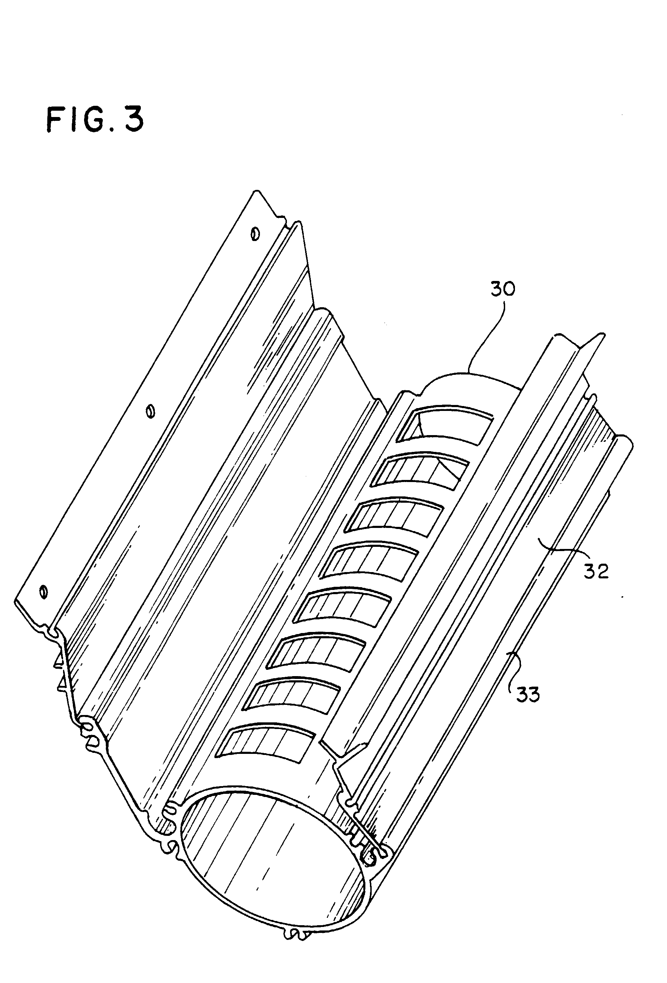

It is also within the scope of the present invention to provide the portions of the module having lower hardness and strength properties by constructing the module from parts initially having such lesser properties along with parts initially having higher hardness and strength properties. This could be accomplished by constructing the various mating parts of the module such that they can be form fitted much in the same manner as tongue-in-groove flooring. FIG. 3 illustrates a three piece reaction canister body 30 having opposite top 32 and bottom 33 sidewalls, which provide such a form fit construction. In this embodiment, the portion having lower hardness and strength properties can comprise the entirety of one of the mating parts or only a portion thereof. And while providing softened sidewall portions in the vicinity of the canister mouth in accordance with the present invention is sufficient to pass the FMVSS 201 standard, it is further within the scope of the invention to employ additional ancillary means, e.g. perforations, folds, etc. during manufacture of the modules.

## Claims

1. An elongated trough-shaped automotive air bag reaction canister body (10) comprising a pair of top and bottom sidewalls (2, 3) having first and second opposite ends (4, 5) said bottom sidewalls being joined together at said second ends (5) by a concave base (1) characterised in that at least a predetermined portion (6) of one or both of said pair of top sidewalls (2), between said first and second opposite ends, has strength/hardness properties lower than the strength/hardness properties of the remaining sidewall portions.

2. A canister body according to claim 1 which is made of extruded 6005, 6061 or 6063 aluminium alloy.

3. A canister body according to claim 2 which is made of 6061 or 6063 aluminium alloy in the T-6 condition, the portion (6) of lower hardness being in the annealed condition.

4. A canister body according to claim 3 wherein the annealed portion (6) of lower hardness exhibits hardness and strength properties equivalent to a T-4 temper condition.

5. A canister body according to claim 2 which is made of 6005 aluminium alloy in the T-5 condition, the portion (6) of lower hardness being in the annealed condition.

6. A canister body according to claim 5 wherein the annealed portion (6) of lower hardness exhibits hardness and strength properties equivalent to a T-1 temper condition.

7. A canister body according to any preceding claim wherein the portion (6) of lower hardness is adjacent said first end (4) and extends throughout the length of the top sidewalls (2).

8. A canister body according to any preceding claim wherein both top sidewalls (2) have a softened portion (6).

9. A canister body (10, 20) according to any preceding claim which is of a single piece construction.

10. A canister body (30) according to any one of claims 1 to 8 which is of a multi-piece construction.

11. A canister body according to claim 10 wherein said portion of lower strength and hardness comprises at least one separate piece (32) of said multi-piece canister.
